# EUROPEAN PATENT SPECIFICATION

(11) **EP 4 243 307 B1**
(45) Date of publication and mention of the grant of the patent: **25.03.2026**
(21) Application number: 23159959.8
(22) Date of filing: 03.03.2023
(51) Int. Cl.: H04J 3/06, H04L 25/14, H04L 43/0852

(54) **METHOD AND APPARATUS FOR ALIGNMENT DELAY COMPENSATION**
VERFAHREN UND VORRICHTUNG ZUR KOMPENSATION DER AUSRICHTUNGSVERZÖGERUNG
PROCÉDÉ ET APPAREIL DE COMPENSATION DE RETARD D'ALIGNEMENT

(30) Priority: 07.03.2022 CN 202210216318
(43) Date of publication of application: 13.09.2023
(73) Proprietor: Nokia Solutions and Networks Oy, 02610 Espoo (FI)
(72) Inventor: TANG, Shi Qing, Shanghai (CN); HUANG, Lei, Shanghai, 200030 (CN); LIU, Da Lin, Shanghai, 201299 (CN)
(74) Representative: DREISS Patentanwälte PartG mbB

(56) References cited:
- WO-A1-2019/147483
- CN-B- 105 681 018
- US-A1- 2015 055 644

## Description

### Technical Field

The present invention relates to the field of communication technology, in particular to a method and apparatus for alignment delay compensation.

### Background Art

Based on the solution in the prior art, for delay calibration, the roundtrip delay of CPRI (Common Public Radio Interface) link will be measured, and the uplink and downlink delays are calculated based on the assumption that CPRI fiber delay is equal for uplink and downlink. The transponder is transparent for the delay measurement, and the delays from the receiver side to the transmitting side should be constant and equal for uplink and downlink directions.

For eCPRI (Ethernet/enhanced CPRI), timing will be controlled using typically IEEE 1588 for timing synchronization. The cross-connected eCPRI links will be transparent for delay measurement, such that delay for eCPRI in the transponder should also be constant and equal for uplink and downlink directions.

However, as to how to meet the requirements and reduce the asymmetric delay in the uplink and downlink in the front-haul network, neither of the CPRI and eCPRI standards presents a detailed solution. US 2015/055644 A1 discloses an apparatus comprising a synchronization block and a physical coding sublayer block.

### Summary of the Invention

The objective of the embodiments of the present application is to provide a method and apparatus for alignment delay compensation.

The embodiments of the present application provide a method for alignment delay compensation according to claim 1
The embodiments of the present application provide an apparatus for alignment delay compensation according to claim 6.

The embodiments of the present application provide a network apparatus according to claim 11.

The embodiments of the present application provide a computer readable storage medium according to claim 12.

Compared with the prior art, the present application has the following advantages: with the method for alignment delay compensation in accordance with the embodiments of the present application, by detecting the alignment delay in the physical coding sublayer on the receiver side, transmitting the alignment delay to the transmitting side, and performing delay compensation on the transmitting side, the asymmetric delay in the front-haul network can be compensated for, and the accuracy of delay compensation can be greatly improved; the method in accordance with the embodiments of the present application provides a low-cost way of ensuring equal delays for all the ports, especially for the ports in the uplink and downlink data links; furthermore, the implementation of the physical coding symbols in accordance with the embodiments of the present application is beneficial for increasing the number of transponder ports, simplifying network management, and improving the accuracy of the transmission equipment; Therefore, telecommunication services of high quality can be provided, and the cost of the time-sensitive front-haul network apparatus can be lowered.

### Description of the Drawings

Through reading the detailed description of the non-limiting embodiments with reference to the following drawings, other features, objectives and advantages of the present invention will become more obvious:
Fig. 1 shows the flowchart of a method for alignment delay compensation in accordance with the embodiments of the present application;
Fig. 2 shows the schematic view of an example of delay compensation based on alignment delay markers;
Fig. 3 shows the schematic structural view of an apparatus for alignment delay compensation in accordance with the present invention;
Fig. 4 shows the schematic view of an example of front-haul network apparatus in accordance with the embodiments of the present application;
Fig. 5 shows the schematic procedural view of an example of calculating delay on the receiver side in accordance with the embodiments of the present application;
Fig. 6 shows the schematic procedural view of an example of delay compensation on the transmitting side in accordance with the embodiments of the present application;
Fig. 7 shows the schematic view of an example of the experiment in accordance with the embodiments of the present application.

The same or similar reference numbers in the drawings represent the same or similar parts.

### Detailed Description of the Embodiments

Before discussing example embodiments in more detail, it is noted that some example embodiments are described as processes or methods depicted by flowcharts. Although the flowcharts describe the operations as sequential processes, many of the operations may be executed in parallel, concurrently, or simultaneously. In addition, the order of operations may be re-arranged. The processes may be terminated when their operations are completed, but may also include additional steps not shown in the flowcharts. The processes may correspond to methods, functions, procedures, subroutines, subprograms, etc.

Methods discussed hereinafter, some of which are illustrated by flowcharts, may be implemented by hardware, software, firmware, middleware, microcode, hardware description languages, or any combination thereof. When implemented by software, firmware, middleware or microcode, the program code or code segments used to carry out the necessary tasks may be stored in a machine or computer readable medium, such as a storage medium. A processor(s) may carry out the necessary tasks.

The specific structural and functional details disclosed herein are merely representative and serve the purpose of describing example embodiments of the present invention. However, the present invention may be embodied in many alternative forms, and should not be construed as limited to only the embodiments set forth herein.

It will be understood that although the terms 'first', 'second', etc. may be used herein to describe various elements, these elements should not be limited by these terms. These terms are used only to distinguish one element from another. For example, a first element could be termed a second element, and, similarly, a second element could be termed a first element, without departing from the scope of example embodiments. As used herein, the term 'and/or' includes any and all combinations of one or more of the associated items that are listed.

It will be understood that when an element is referred to as being 'connected' or 'coupled' to another element, it can be directly connected or coupled to the other element, or intervening elements may be present. In contrast, when an element is referred to as being 'directly connected' or 'directly coupled' to another element, there are no intervening elements present. Other words used to describe the relationship between elements should be interpreted in a like fashion (e.g., 'between' versus 'directly between', 'adjacent' versus 'directly adjacent', etc.).

The terminology used herein is for the purpose of describing particular embodiments only and is not intended to be limiting of example embodiments. As used herein, the singular forms 'a', 'an' and 'the' are intended to include the plural forms as well unless clearly indicated otherwise in the context. It will be further understood that the terms 'comprises', 'comprising', 'includes' and/or 'including', when used herein, specify the presence of the stated features, integers, steps, operations, elements and/or components, and do not preclude the presence or addition of one or more other features, integers, steps, operations, elements, components and/or combinations thereof.

It should also be noted that in some alternative implementations, the functions/acts mentioned may occur out of the order denoted in the figures. For example, two figures shown in succession may actually be executed substantially simultaneously or may sometimes be executed in the reverse order, depending upon the functions/acts involved.

Unless otherwise defined, all terms (including technological and scientific terms) used herein have the same meaning as commonly understood by one of ordinary skill in the art to which the example embodiments belong. It will be further understood that terms, e.g., those defined in commonly used dictionaries, should be interpreted as having a meaning that is consistent with their meaning in the context of the related art and should not be interpreted in an idealized or overly formal sense unless expressly so defined herein.

The present invention will be described in more detail in the following in connection with the drawings.

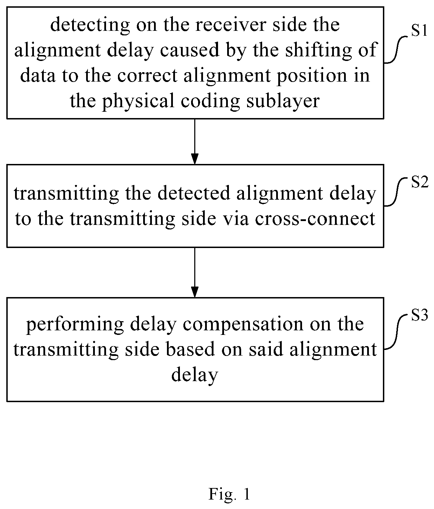

Fig. 1 shows the flowchart of a method for alignment delay compensation in accordance with the embodiments of the present application. Said method comprises steps S1, S2 and S3.

Wherein, the method in accordance with the embodiments of the present application is implemented by an apparatus contained in computer equipment.

Said computer equipment include a type of electronic equipment that automatically carries out numerical computations and/or information processing based on instructions that are set or stored in advance. The hardware of said electronic equipment includes microprocessors, application specific integrated circuits (ASIC), field programmable gate arrays (FPGA), digital signal processors (DSP), embedded devices, etc.

Said computer equipment includes network apparatus. Wherein, said network apparatus includes, but is not limited to, a single network server, a server group composed of multiple network servers, or a cloud which is based upon cloud computing and composed of a large number of hosts or network servers, wherein cloud computing is a type of distributed computing, i.e., a super virtual computer composed of a cluster of loosely coupled computer sets.

Preferably, the method in accordance with the embodiments of the present application is implemented by an apparatus contained in front-haul network apparatus.

It needs to be noted that said user equipment, network apparatus and networks are only for example. Other user equipment, network apparatus and networks that are now existing or might emerge in the future, if applicable to the present invention, should also be included within the protection scope of the present invention.

With reference to Fig. 1, in step S1, detecting on the receiver side the alignment delay caused by the shifting of data to the correct alignment position in the physical coding sublayer.

In accordance with an embodiment, said step S1 further includes steps S101 (not shown in the figure) and S102 (not shown in the figure).

In step S101, determining the correct alignment position based on the encoding method used in physical coding sublayer.

Specifically, if 64B/66B encoding is used in physical coding sublayer, the correct alignment position is determined by finding the alignment control word marker (CWM) and marking the corresponding position as the correct alignment position. For 64B/66B, for example, the alignment position is the CWM such as X '2168C1' found from {M2, M1, M0} IEEE 802.3 table 82-2.

If 8B/10B encoding is used in physical coding sublayer, the correct alignment position is determined by finding the symbol code K28.5 denoted by a comma and marking the corresponding position as the correct alignment position.

It needs to be noted, as known by those skilled in the art, CPRI supports 8B/10B or 64B/66B encoding. The 64B/66B encoding scheme uses 2 overhead bits for every 64 bits of raw data transmitted with the overhead accounting for 3.125%, while the 8B/10B encoding scheme essentially uses 2 bits of overhead for every 8 bits of source data with the overhead account for 25%. Therefore, the 64B/66B encoding scheme is more efficient than 8B/10B encoding.

In step S102, detecting the alignment delay caused by the shifting of data to the correct alignment position in the physical coding sublayer based on said alignment position.

Continuing with the explanation with reference to Fig. 1, in step S2, transmitting the detected alignment delay to the transmitting side via cross-connect.

Subsequently, in step S3, performing delay compensation on the transmitting side based on said alignment delay.

Wherein, the delay compensation can be performed automatically or manually.

For example, the RX alignment delay can be read from the PCS_RX_ALIGN_DELAY register of the source port. In order to obtain the accurate delay value, the alignment delay needs to be compensated for on the PCS transmitting side and filled in the PCS _TX_DELAY_COMP register of the destination port. The delay compensation can be performed automatically or manually.

In accordance with an embodiment, the variable delays from the PCS RX channels to the corresponding TX channels are compensated for using CWM alignment delay markers.

In the IEEE 802.3, alignment markers are added periodically to each PCS lane in order to support phase deskewing and reordering of the individual PCS lanes on the PCS receiver side. The alignment marker has the form of a specially defined 66-bit data block with a control block synchronization header, which allows the alignment markers to be inserted into all the PCS lanes at the same time.

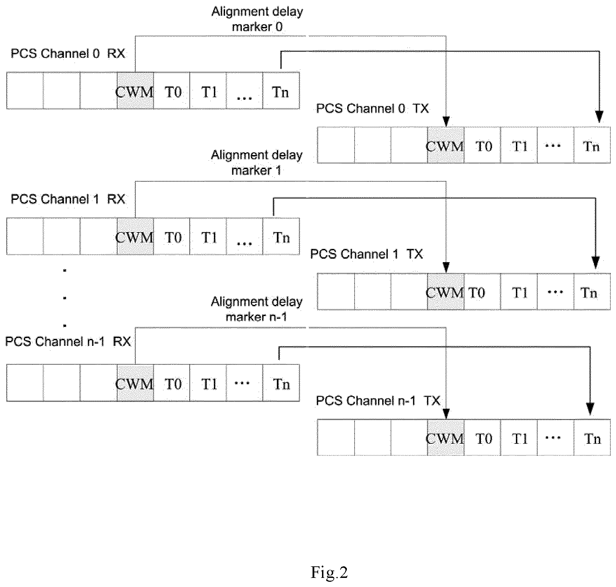

The CWM alignment delay marker in accordance with the embodiments of the present application will be explained below with Fig. 2. Fig. 2 shows the schematic view of an example of delay compensation based on alignment delay markers. With reference to the figure, the CWM alignment delay markers in this example are denoted by '0' to 'n-1', and are used to compensate for the varying delays from the RX channels on the PCS receiver side (T0, T1, ..., Tn) to the TX channels on the PCS transmitting side (T0, T1, ..., Tn). For example, in the PCS RX channel 0, the RX timestamps are T0, T1, ..., Tn related to the reference point CWM. The same timestamps such as T0, T1, ..., Tn are used in the TX channels. Accordingly, the delay compensation is accurate to the nanosecond.

In accordance with an embodiment, said method measures the roundtrip delays of CPRI and eCPRI links for delay calibration. Furthermore, said method calculates the uplink and downlink delays based on the assumption that the network delay of CPRI is equal for uplink and downlink.

With the method in accordance with the embodiments of the present application, by detecting the alignment delay in the physical coding sublayer on the receiver side, transmitting the alignment delay to the transmitting side, and performing delay compensation on the transmitting side, the asymmetric delay in the front-haul network can be compensated for, and the accuracy of delay compensation can be greatly improved; the method in accordance with the embodiments of the present application provides a low-cost way of ensuring equal delays for all the ports, especially for the ports in the uplink and downlink data links; furthermore, the implementation of the physical coding symbols in accordance with the embodiments of the present application is beneficial for increasing the number of transponder ports, simplifying network management, and improving the accuracy of the transmission equipment; Therefore, telecommunication services of high quality can be provided, and the cost of the time-sensitive front-haul network apparatus can be lowered.

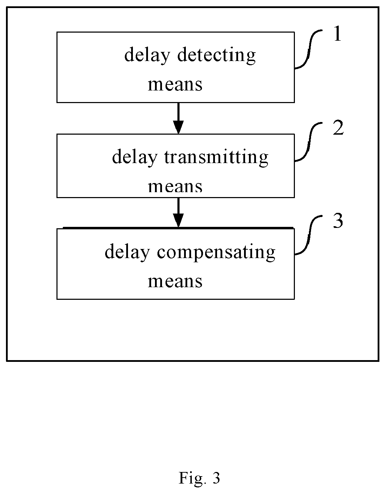

Fig. 3 shows the schematic structural view of an apparatus for alignment delay compensation in accordance with the present invention.

Wherein, said apparatus comprises: means for detecting on the receiver side the alignment delay caused by the shifting of data to the correct alignment position in the physical coding sublayer (referred to simply as 'delay detecting means 1' hereinafter); means for transmitting the detected alignment delay to the transmitting side via cross-connect (referred to simply as 'delay transmitting means 2' hereinafter); means for performing delay compensation on the transmitting side based on said alignment delay (referred to simply as 'delay compensating means 3' hereinafter).

The delay detecting means 1 detects on the receiver side the alignment delay caused by the shifting of data to the correct alignment position.

The delay detecting means 1 determines the correct alignment position in the physical coding sublayer based on the encoding method used with the physical coding sublayer. Specifically, if 64B/66B encoding is used in physical coding sublayer, the correct alignment position is determined by finding the alignment control word marker (CWM) and marking the corresponding position as the correct alignment position. For 64B/66B, for example, the alignment position is the CWM such as X '2168C1' found from {M2, M1, M0} IEEE 802.3 table 82-2.

If 8B/10B encoding is used in physical coding sublayer, the correct alignment position is determined by finding the symbol code K28.5 denoted by a comma and marking the corresponding position as the correct alignment position.

It needs to be noted, as known by those skilled in the art, CPRI supports 8B/10B or 64B/66B encoding. The 64B/66B encoding scheme uses 2 overhead bits for every 64 bits of raw data transmitted with the overhead accounting for 3.125%, while the 8B/10B encoding scheme essentially uses 2 bits of overhead for every 8 bits of source data with the overhead account for 25%. Therefore, the 64B/66B encoding scheme is more efficient than 8B/10B encoding.

Next, the delay detecting means 1 detects the alignment delay caused by the shifting of data to the correct alignment position in the physical coding sublayer based on said alignment position.

Continuing with the explanation with reference to Fig. 3, the delay transmitting means 2 transmits the detected alignment delay to the transmitting side vie cross-connect.

Subsequently, the delay compensating means 3 performs delay compensation on the transmitting side based on said alignment delay.

Wherein, the delay compensating means 3 can perform the delay compensation automatically or manually.

For example, the RX alignment delay can be read from the PCS_RX_ALIGN_DELAY register of the source port. In order to obtain the accurate delay value, the alignment delay needs to be compensated for on the PCS transmitting side and filled in the PCS_TX_DELAY_COMP register of the destination port. The delay compensation can be performed automatically or manually.

In accordance with an embodiment, the delay compensating means 3 compensates for the variable delays from the PCS RX channels to the corresponding TX channels using CWM alignment delay markers.

In the IEEE 802.3, alignment markers are added periodically to each PCS lane in order to support phase deskewing and reordering of the individual PCS lanes on the PCS receiver side. The alignment marker has the form of a specially defined 66-bit data block with a control block synchronization header, which allows the alignment markers to be inserted into all the PCS lanes at the same time.

In accordance with an embodiment, said apparatus measures the roundtrip latencies of CPRI and eCPRI links for delay calibration. Furthermore, said method calculates the uplink and downlink latencies based on the assumption that the network delay of CPRI is equal for uplink and downlink.

With the apparatus in accordance with the embodiments of the present application, by detecting the alignment delay in the physical coding sublayer on the receiver side, transmitting the alignment delay to the transmitting side, and performing delay compensation on the transmitting side, the asymmetric delay in the front-haul network can be compensated for, and the accuracy of delay compensation can be greatly improved; the apparatus in accordance with the embodiments of the present application provides a low-cost way of ensuring equal delays for all the ports, especially for the ports in the uplink and downlink data links; furthermore, the implementation of the physical coding symbols in accordance with the embodiments of the present application is beneficial for increasing the number of transponder ports, simplifying network management, and improving the accuracy of the transmission equipment; Therefore, telecommunication services of high quality can be provided, and the cost of the time-sensitive front-haul network apparatus can be lowered.

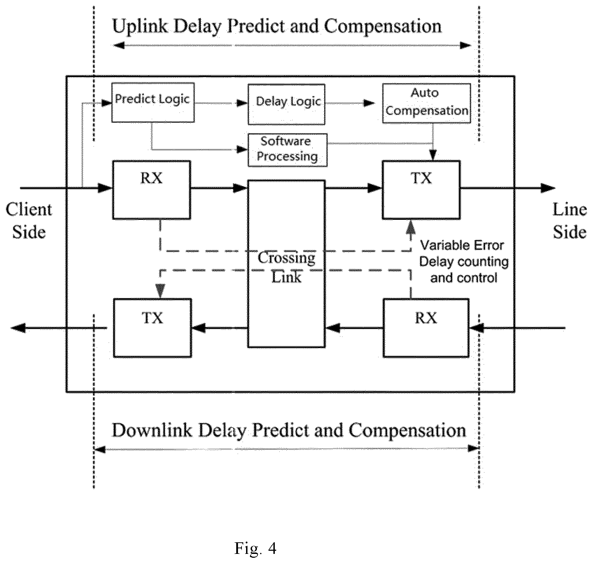

Fig. 4 shows the schematic view of an example of front-haul network apparatus in accordance with the embodiments of the present application.

With reference to Fig. 4, in the direction from the client side to the line side, the front-haul network apparatus in accordance with the example comprises a receiver side module denoted by RX which has N channels, a crossing link, and a transmitting side denoted by TX which has N channels. Similarly, in the direction from the line side to the client side, the front-haul network apparatus comprises a transmitting side denoted by TX which has N channels, a crossing link, and a receiver side module denoted by RX which has N channels. The circuit deployments in the two directions described above are symmetrical in structure.

Furthermore, the front-haul network apparatus comprises a control circuit composed of modules of predict logic, delay logic, software processing and auto compensation. Wherein, software processing module can switch between auto compensation mode and manual compensation mode.

There is an asynchronous first-in-first-out (FIFO) buffer between the RX serializer/deserializer (Ser-Des) clock and the system clock, and there is also an asynchronous FIFO buffer between the TX Ser-Des clock and the system clock. Depending on the phases of the clocks, the clock domain crossing (CDC) buffers will have variable error delays. The PCS RX decoder and the PCS TX decoder may contain forward error correction (FEC) code.

Through detecting the variable delays from different modules and adding extra delay on the transmitting side, a constant delay is ensured. The individual clock domains in the asynchronous FIFO buffer have corresponding variable error delays which are counted as a series of timestamps. The timestamps of the RX channels will then be used in the TX channels. Fig. 4 shows the counting of the variable error delays by dotted lines.

In the front-haul network apparatus shown in Fig. 4, the alignment delay caused by the shifting of data to the correct alignment position in the physical coding sublayer is detected on the RX side, and the detected alignment delay is transmitted to the TX side via crossing link, without the need of measuring the delay of each module. Subsequently, delay compensation is performed on the TX side based on said alignment delay.

It needs to be noted that the example described above is merely for the purpose of explaining the technical solution of the present invention and not intended to be limiting of the present invention. Those skilled in the art will understand that any implementation of the front-haul network apparatus in accordance with the embodiments of the present application should be included within the scope of the present invention.

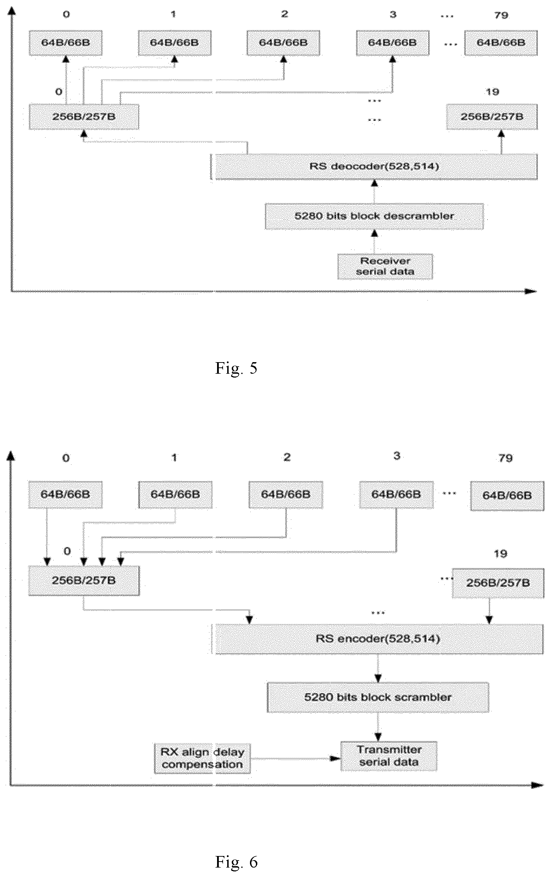

Fig. 5 shows the schematic procedural view of an example of calculating delay on the receiver side in accordance with the embodiments of the present application.

According to this example, the receiver (RX) acquires a 5280-bit data block from the serializer/deserializer. The descrambler will perform decoding according to the linear feed shift register. The Reed-Solomon FEC (RS-FEC) decoder then extracts the symbols from the 5280-bit codeword, performs correction when necessary, and discards the parity symbols. The 256B/257B-to-64B/66B transcoder will reconstruct 4*64/66-bit data blocks, resulting in the 64B/66B data blocks as shown in Fig. 4 (denoted respectively by '0' to '3', ..., till '79' in the figure). If the relative delay of the first 64B/66B data block can be defined as '0', the relative delay of the second 64B/66B data block can be defined as '1'. Similarly, the relative delay of the 79th 64B/66B data block can be defined as '79'. When the second 5280-bit data block comes into the RX circuit, the relative delays can be counted from 0 to 79. If there is no FEC, the relative delays can be counted from 0 to 65. The alignment marker (CWM) may vary between 0 and 79 or between 0 and 65. Therefore, the alignment delay will be calculated in the range of 0~79 or 0~65.

It needs to be noted that the example described above is merely for the purpose of explaining the technical solution of the present invention and not intended to be limiting of the present invention. Those skilled in the art will understand that any implementation of the delay calculation on the receiver side in accordance with the embodiments of the present application should be included within the scope of the present invention.

Fig. 6 shows the schematic procedural view of an example of delay compensation on the transmitting side in accordance with the embodiments of the present application.

According to this example, the Reed-Solomon forward error correction (RS-FEC) scheme is used in CPRI on the transmitting side (TX). The 64B/66B encoded CPRI data blocks are input to the RS-FEC transmission chain. Four consecutive 64B/66B data blocks are transcoded into one 256B/257B data block. The transcoded data bits are passed through a Reed-Solomon encoder whose output data is scrambled with a fixed pseudo-noise (PN) sequence of 5280 bits, which randomizes the header of the 256B/257B transmission word and enables robust codeword synchronization. The Reed-Solomon encoder operates on the Galois Filed (2¹⁰) with a symbol size of 10 bits. The RS encoder processes messages with a size of 514 symbols (5140 bits), which corresponds to 20 transcoded data blocks of 257 bits. The encoder generates 14 parity symbols (140 bits) and appends them to the 20 transcoded data blocks, resulting in a codeword with a block size of 5280 bits (5140 bits + 140 parity bits). The alignment relative delay from the receiver side is also inserted into the transmitted serial data. The alignment marker (CWM) may vary between 0 and 79 or between 0 and 65. Compensation will then be performed according to the variable delays.

It needs to be noted that the example described above is merely for the purpose of explaining the technical solution of the present invention and not intended to be limiting of the present invention. Those skilled in the art will understand that any implementation of the delay compensation on the transmitting side in accordance with the embodiments of the present application should be included within the scope of the present invention.

The technical effects of the embodiments of the present application will be explained below in connection with an experiment.

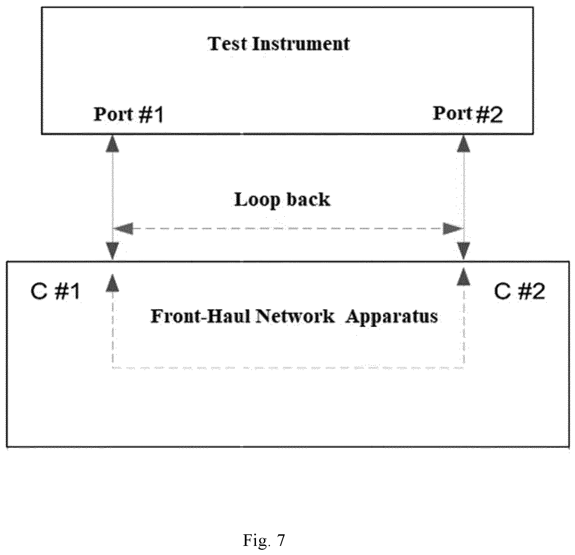

Fig. 7 shows the schematic view of an example of the experiment in accordance with the embodiments of the present application.

With reference to Fig. 7, the test bench is composed of a test instrument and the front-haul network apparatus. The test instrument is capable of providing PTP and SyncE testing of speeds up to 100 GbE, and is designed to meet the stringent timing standards (such as ITU-T G.8273.2 boundary clock) required for 5G network and system tests. Wherein, two ports (denoted by port #1 and port #2 respectively) are used for the test instrument. The 10G or 25G testing signals used in the CPRI and eCPRI protocols are employed for the experiment. Furthermore, the precision time protocol (PTP) two-way method is used in the experiment to calculate the delay. Additionally, the front-haul network apparatus is operating in the 'transponder' mode.

The test steps for asymmetry value in the experiment are as follows:
1. First selecting the 10G signal according to the test bench, and connecting the corresponding ports on the instrument and the front-haul network apparatus via fiber-optic network;
2. Providing the PTP profile on the instrument through ITU-T G.8275.1, and beginning to test and record the two-way cTE (PTP method) as cTE1 using the front-haul network apparatus;
3. Then cold rebooting the front-haul network apparatus several times and repeating step 2;
4. Looping back between the two ports on the instrument through the network, and beginning to test and record the two-way cTE in loopback mode as cTE2;
5. The asymmetry value shall be the absolute value of |cTE1-cTE2|;
6. Repeating the above steps with the 25G signal.

The test results corresponding to the 10G signal and the 25G signal are listed respectively in Table 1 and Table2 below:

**Table 1**

| Test case | 10G manual compensation of asymmetrical latency (ns) | 10G automatic compensation of asymmetrical latency (ns) | Improvement (percentage) |
|---|---|---|---|
| 1 | 0.922 | 0.492 | 46.6% |
| 2 | 1.002 | 0.369 | 63.2% |
| 3 | 1.575 | 0.407 | 74.2% |
| 4 | 1.663 | 0.277 | 83.3% |
| 5 | 0.447 | 0.279 | 37.6% |
| 6 | 1.132 | 0.305 | 64.2% |
| average | 0.236 | 0.075 | 68.2% |

**Table 2**

| Test case | 25G manual compensation of asymmetrical latency (ns) | 25G automatic compensation of asymmetrical latency (ns) | Improvement (percentage) |
|---|---|---|---|
| 1 | 0.942 | 0.916 | 2.8% |
| 2 | 0.600 | 0.423 | 29.5% |
| 3 | 0.487 | 0.132 | 73.2% |
| 4 | 0.258 | 0.050 | 81% |
| 5 | 1.529 | 0.835 | 45.4% |
| 6 | 0.236 | 0.075 | 68.2% |
| average | 0.675 | 0.405 | 40% |

According to the test results, the asymmetry value is variable after cold reboot. For the 10G/25G signal, the asymmetry value may be less than 2 nanoseconds (ns) after cold reboot. In Table 1 corresponding to the 10G signal, the average of the 6 asymmetry values is 0.236 ns in manual mode and 0.075 ns in automatic mode, which is improved by 68.2%. Similarly, in Table 2 corresponding to the 25G signal, the average of the 6 asymmetry values is 0.675 ns in manual mode and 0.405 ns in automatic mode, which is improved by 40%.

Base on the lab test results above, the scheme in accordance with the embodiments of the present application can improve the accuracy of latency to less than 2 ns.

The software program of the present invention may be executed by a processor to implement the steps or functions described hereinabove. Likewise, the software program of the present invention (including the relevant data structures) may be stored in a computer readable recording medium, for example, a RAM memory, a magnetic or optical drive, or a floppy disk, and other similar devices. In addition, some steps or functions of the present invention may be implemented by hardware, for example, as a circuit cooperating with a processor to execute various functions or steps.

In addition, at least a portion of the present invention may be applied as a computer program product, for example, computer program instructions which, when executed by a computer, may invoke or provide the methods and/or technical solutions in accordance with the present invention through operations of the computer. Furthermore, the program instructions invoking the methods of the present invention may be stored in a fixed or mobile recording medium, and/or transmitted through broadcast or data flow in other signal bearing media, and/or stored in a working memory of a computing device which operates according to the program instructions. Here, one embodiment according to the present invention includes an apparatus comprising a memory for storing computer program instructions and a processor for executing the program instructions, wherein the computer program instructions, when executed by the processor, trigger the apparatus to execute the methods and/or technical solutions according to a plurality of embodiments of the present invention.

To those skilled in the art, it is apparent that the present invention is not limited to the details of the illustrative embodiments mentioned above, and can be implemented in other specific forms without departing from the scope of the claims. Therefore, from any perspective, the embodiments should be regarded as illustrative and not restrictive. The scope of the present invention is defined by the appended claims and not the depiction above. Therefore, all variations within the scope of the claims are intended to be encompassed within the present invention. No reference numerals in the claims should be regarded as limiting the involved claims. In addition, it is apparent that the word 'comprise' or 'include' does not exclude other units or steps, and singularity does not exclude plurality. A plurality of units or apparatuses stated in a system claim may also be implemented by a single unit or apparatus through software or hardware. Words like 'first' and 'second' are used to indicate names and not to indicate any specific order.

## Claims

1. A method for alignment delay compensation, wherein said method comprises:
detecting (S1) on a receiver side of a physical coding sublayer the alignment delay caused by the shifting of data to the correct alignment position in the physical coding sublayer;
transmitting (S2) the detected alignment delay to the transmitting side of the physical coding sublayer via cross-connect;
performing (S3) delay compensation on the transmitting side of the physical coding sublayer based on said alignment delay.

2. The method according to Claim 1, wherein said detecting (S1) the alignment delay caused by the shifting of data to the correct alignment position on the receiver side comprises:
determining the correct alignment position based on the encoding method used in physical coding sublayer;
detecting the alignment delay caused by the shifting of data to the correct alignment position in the physical coding sublayer based on said alignment position.

3. The method according to Claim 2, wherein if 64B/66B encoding is used in physical coding sublayer, said determining the correct alignment position comprises:
finding the alignment control word marker and marking the corresponding position as the correct alignment position.

4. The method according to Claim 2, wherein if 8B/10B encoding is used in physical coding sublayer, said determining the correct alignment position comprises:
finding the symbol code K28.5 denoted by a comma and marking the corresponding position as the correct alignment position.

5. The method according to Claim 1 or 2, wherein said performing delay compensation on the transmitting side based on said alignment delay comprises:
compensating for the variable delays from the receiver side channels to the corresponding transmitting side channels using control word marker, CWM, alignment delay markers.

6. An apparatus for alignment delay compensation, wherein said apparatus comprises:
means (1) for detecting on a receiver side of a physical coding sublayer the alignment delay caused by the shifting of data to the correct alignment position in the physical coding sublayer;
means (2) for transmitting the detected alignment delay to the transmitting side of the physical coding sublayer via cross-connect;
means (3) for performing delay compensation on the transmitting side of the physical coding sublayer based on said alignment delay.

7. The apparatus according to Claim 6, wherein said means (1) for detecting on the receiver side the alignment delay caused by the shifting of data to the correct alignment position comprise:
determining the correct alignment position based on the encoding method used in physical coding sublayer;
detecting the alignment delay caused by the shifting of data to the correct alignment position in the physical coding sublayer based on said alignment position.

8. The apparatus according to Claim 7, wherein if 64B/66B encoding is used in physical coding sublayer, said determining the correct alignment position comprises:
finding the alignment control word marker and marking the corresponding position as the correct alignment position.

9. The apparatus according to Claim 7, wherein if 8B/10B encoding is used in physical coding sublayer, said determining the correct alignment position comprises:
finding the symbol code K28.5 denoted by a comma and marking the corresponding position as the correct alignment position.

10. The apparatus according to Claim 6 or 7, wherein said means (3) for performing delay compensation on the physical coding sublayer transmitting side based on said alignment delay comprise:
compensating for the variable delays from the physical coding sublayer receiver side channels to the corresponding transmitting side channels using control word marker, CWM, alignment delay markers.

11. A network apparatus, wherein said network apparatus comprises a processor and a memory storing computer programs therein, the following steps are executed when said computer programs are executed by said processor:
detecting (S1) on a receiver side of a physical coding sublayer the alignment delay caused by the shifting of data to the correct alignment position in the physical coding sublayer;
transmitting (S2) the detected alignment delay to the transmitting side of the physical coding sublayer via cross-connect;
performing (S3) delay compensation on the transmitting side of the physical coding sublayer based on said alignment delay.

12. A computer readable storage medium storing therein computer programs for a network apparatus, the following steps are executed when the computer programs are executed by the network apparatus:
detecting on a receiver side of a physical coding sublayer the alignment delay caused by the shifting of data to the correct alignment position in the physical coding sublayer;
transmitting the detected alignment delay to the transmitting side of the physical coding sublayer via cross-connect;
performing delay compensation on the transmitting side of the physical coding sublayer based on said alignment delay.

## Patentansprüche

1. Verfahren zur Kompensation der Ausrichtungsverzögerung, wobei das Verfahren umfasst:
Feststellen (S1), auf einer Empfängerseite einer physikalischen Codierungsunterschicht, der Ausrichtungsverzögerung, die von dem Verschieben von Daten zur korrekten Ausrichtungsposition in der physikalischen Codierungsunterschicht verursacht wird;
Senden (S2) der festgestellten Ausrichtungsverzögerung an die sendende Seite der physikalischen Codierungsunterschicht über Cross-Connect;
Durchführen (S3) von Verzögerungskompensation auf der sendenden Seite der physikalischen Codierungsunterschicht auf der Grundlage der Ausrichtungsverzögerung.

2. Verfahren nach Anspruch 1, wobei das Feststellen (S1) der Ausrichtungsverzögerung, die vom Verschieben von Daten zur korrekten Ausrichtungsposition auf der Empfängerseite verursacht wird, umfasst:
Bestimmen der korrekten Ausrichtungsposition auf der Grundlage des in der physikalischen Codierungsunterschicht verwendeten Codierungsverfahrens;
Feststellen der Ausrichtungsverzögerung, die von dem Verschieben von Daten zur korrekten Ausrichtungsposition in der physikalischen Codierungsunterschicht verursacht wird, auf der Grundlage der Ausrichtungsposition.

3. Verfahren nach Anspruch 2, wobei, wenn 64B/66B-Codierung in der physikalischen Codierungsunterschicht verwendet wird, das Bestimmen der korrekten Ausrichtungsposition umfasst:
Finden der Ausrichtungssteuerwortmarkierung und Markieren der entsprechenden Position als die korrekte Ausrichtungsposition.

4. Verfahren nach Anspruch 2, wobei, wenn 8B/10B-Codierung in der physikalischen Codierungsunterschicht verwendet wird, das Bestimmen der korrekten Ausrichtungsposition umfasst:
Finden des Symbolcodes K28.5, der von einem Komma bezeichnet wird, und Markieren der entsprechenden Position als die korrekte Ausrichtungsposition.

5. Verfahren nach Anspruch 1 oder 2, wobei das Durchführen von Verzögerungskompensation auf der sendenden Seite auf der Grundlage der Ausrichtungsverzögerung umfasst:
Kompensieren für die veränderlichen Verzögerungen von den empfängerseitigen Kanälen zu den entsprechenden sendeseitigen Kanälen unter Verwendung von Steuerwortmarkierungs- (Control Word Marker), CWM, -Ausrichtungsverzögerungsmarkierungen.

6. Vorrichtung zur Kompensation von Ausrichtungsverzögerung, wobei die Vorrichtung umfasst:
Mittel (1) zum Feststellen, auf einer Empfängerseite einer physikalischen Codierungsunterschicht, der Ausrichtungsverzögerung, die von dem Verschieben von Daten zur korrekten Ausrichtungsposition in der physikalischen Codierungsunterschicht verursacht wird;
Mittel (2) zum Senden der festgestellten Ausrichtungsverzögerung an die sendende Seite der physikalischen Codierungsunterschicht über Cross-Connect;
Mittel (3) zum Durchführen von Verzögerungskompensation auf der sendenden Seite der physikalischen Codierungsunterschicht auf der Grundlage der Ausrichtungsverzögerung.

7. Vorrichtung nach Anspruch 6, wobei die Mittel (1) zum Feststellen, auf der Empfängerseite, der Ausrichtungsverzögerung, die vom Verschieben von Daten zur korrekten Ausrichtungsposition verursacht wird, umfassen:
Bestimmen der korrekten Ausrichtungsposition auf der Grundlage des in der physikalischen Codierungsunterschicht verwendeten Codierungsverfahrens;
Feststellen der Ausrichtungsverzögerung, die von dem Verschieben von Daten zur korrekten Ausrichtungsposition in der physikalischen Codierungsunterschicht verursacht wird, auf der Grundlage der Ausrichtungsposition.

8. Vorrichtung nach Anspruch 7, wobei, wenn 64B/66B-Codierung in der physikalischen Codierungsunterschicht verwendet wird, das Bestimmen der korrekten Ausrichtungsposition umfasst:
Finden der Ausrichtungssteuerwortmarkierung und Markieren der entsprechenden Position als die korrekte Ausrichtungsposition.

9. Vorrichtung nach Anspruch 7, wobei, wenn 8B/10B-Codierung in der physikalischen Codierungsunterschicht verwendet wird, das Bestimmen der korrekten Ausrichtungsposition umfasst:
Finden des Symbolcodes K28.5, der von einem Komma bezeichnet wird, und Markieren der entsprechenden Position als die korrekte Ausrichtungsposition.

10. Vorrichtung nach Anspruch 6 oder 7, wobei die Mittel (3) zum Durchführen von Verzögerungskompensation auf der sendenden Seite der physikalischen Codierungsunterschicht auf der Grundlage der Ausrichtungsverzögerung umfassen:
Kompensieren für die veränderlichen Verzögerungen von den empfängerseitigen Kanälen der physikalischen Codierungsunterschicht zu den entsprechenden sendeseitigen Kanälen unter Verwendung von Steuerwortmarkierungs- (Control Word Marker), CWM, -Ausrichtungsverzögerungsmarkierungen.

11. Netzwerkvorrichtung, wobei die Netzwerkvorrichtung einen Prozessor und einen Speicher umfasst, der Computerprogramme darin speichert, wobei die folgenden Schritte ausgeführt werden, wenn die Computerprogramme von dem Prozessor ausgeführt werden:
Feststellen (S1), auf einer Empfängerseite einer physikalischen Codierungsunterschicht, der Ausrichtungsverzögerung, die von dem Verschieben von Daten zur korrekten Ausrichtungsposition in der physikalischen Codierungsunterschicht verursacht wird;
Senden (S2) der festgestellten Ausrichtungsverzögerung an die sendende Seite der physikalischen Codierungsunterschicht über Cross-Connect;
Durchführen (S3) von Verzögerungskompensation auf der sendenden Seite der physikalischen Codierungsunterschicht auf der Grundlage der Ausrichtungsverzögerung.

12. Maschinenlesbarer Datenträger, der darin Computerprogramme für eine Netzwerkvorrichtung speichert, wobei die folgenden Schritte ausgeführt werden, wenn die Computerprogramme von der Netzwerkvorrichtung ausgeführt werden:
Feststellen, auf einer Empfängerseite einer physikalischen Codierungsunterschicht, der Ausrichtungsverzögerung, die von dem Verschieben von Daten zur korrekten Ausrichtungsposition in der physikalischen Codierungsunterschicht verursacht wird;
Senden der festgestellten Ausrichtungsverzögerung an die sendende Seite der physikalischen Codierungsunterschicht über Cross-Connect;
Durchführen von Verzögerungskompensation auf der sendenden Seite der physikalischen Codierungsunterschicht auf der Grundlage der Ausrichtungsverzögerung.

## Revendications

1. Procédé de compensation de retard d'alignement, dans lequel ledit procédé comprend :
la détection (S1) sur un côté récepteur d'une sous-couche de codage physique d'un retard d'alignement provoqué par le décalage d'une donnée vers la position d'alignement correcte dans la sous-couche de codage physique;
l'émission (S2) du retard d'alignement détecté vers le côté émetteur de la sous-couche de codage physique via une interconnexion;
la réalisation (S3) d'une compensation de retard sur le côté émetteur de la sous-couche de codage physique sur la base dudit retard d'alignement.

2. Procédé selon la revendication 1, dans lequel ladite détection (S1) du retard d'alignement provoqué par le décalage d'une donnée vers la position d'alignement correcte sur le côté récepteur comprend :
la détermination de la position d'alignement correcte sur la base du procédé de codage utilisé dans une sous-couche de codage physique;
la détection du retard d'alignement provoqué par le décalage d'une donnée vers la position d'alignement correcte dans la sous-couche de codage physique sur la base de ladite position d'alignement.

3. Procédé selon la revendication 2, dans lequel si un codage 64B/66B est utilisé dans une sous-couche de codage physique, ladite détermination de la position d'alignement correcte comprend :
le fait de trouver la marque de mot de commande d'alignement et de marquer la position correspondante en tant que position d'alignement correcte.

4. Procédé selon la revendication 2, dans lequel si un codage 8B/10B est utilisé dans une sous-couche de codage physique, ladite détermination de la position d'alignement correcte comprend :
le fait de trouver le code symbolisé K28.5 indiqué par une virgule et de marquer la position correspondante en tant que position d'alignement correcte.

5. Procédé selon la revendication 1 ou 2, dans lequel ladite réalisation d'une compensation de retard sur le côté émetteur sur la base dudit retard d'alignement comprend :
la compensation pour les retards variables depuis les canaux du côté récepteur vers les canaux correspondants du côté émetteur à l'aide de marques de retard d'alignement de marque de mot de commande, CWM (*control word marker*).

6. Appareil de compensation de retard d'alignement, dans lequel ledit appareil comprend :
un moyen (1) de détection sur un côté récepteur d'une sous-couche de codage physique d'un retard d'alignement provoqué par le décalage d'une donnée vers la position d'alignement correcte dans la sous-couche de codage physique;
un moyen (2) d'émission du retard d'alignement détecté vers le côté émetteur de la sous-couche de codage physique via une interconnexion;
un moyen (3) de réalisation d'une compensation de retard sur le côté émetteur de la sous-couche de codage physique sur la base dudit retard d'alignement.

7. Appareil selon la revendication 6, dans lequel ledit moyen (1) de détection sur le côté récepteur du retard d'alignement provoqué par le décalage d'une donnée vers la position d'alignement correcte comprend :
la détermination de la position d'alignement correcte sur la base du procédé de codage utilisé dans une sous-couche de codage physique;
la détection du retard d'alignement provoqué par le décalage d'une donnée vers la position d'alignement correcte dans la sous-couche de codage physique sur la base de ladite position d'alignement.

8. Appareil selon la revendication 7, dans lequel si un codage 64B/66B est utilisé dans une sous-couche de codage physique, ladite détermination de la position d'alignement correcte comprend :
le fait de trouver la marque de mot de commande d'alignement et de marquer la position correspondante en tant que position d'alignement correcte.

9. Appareil selon la revendication 7, dans lequel si un codage 8B/10B est utilisé dans une sous-couche de codage physique, ladite détermination de la position d'alignement correcte comprend :
le fait de trouver le code symbolisé K28.5 indiqué par une virgule et de marquer la position correspondante en tant que position d'alignement correcte.

10. Appareil selon la revendication 6 ou 7, dans lequel ledit moyen (3) de réalisation d'une compensation de retard sur le côté émetteur de sous-couche de codage physique sur la base dudit retard d'alignement comprend :
la compensation pour les retards variables depuis les canaux du côté récepteur de sous-couche de codage physique vers les canaux correspondants du côté émetteur à l'aide de marques de retard d'alignement de marque de mot de commande, CWM.

11. Appareil de réseau, dans lequel ledit appareil de réseau comprend un processeur et une mémoire stockant des programmes informatiques dans celle-ci, dans lequel les étapes suivantes sont exécutées lorsque lesdits programmes informatiques sont exécutés par ledit processeur :
la détection (S1) sur un côté récepteur d'une sous-couche de codage physique du retard d'alignement provoqué par le décalage d'une donnée vers la position d'alignement correcte dans la sous-couche de codage physique;
l'émission (S2) du retard d'alignement détecté vers le côté émetteur de la sous-couche de codage physique via une interconnexion;
la réalisation (S3) d'une compensation de retard sur le côté émetteur de la sous-couche de codage physique sur la base dudit retard d'alignement.

12. Support de stockage lisible par ordinateur stockant dans celui-ci des programmes informatiques pour un appareil de réseau, dans lequel les étapes suivantes sont exécutées lorsque les programmes informatiques sont exécutés par l'appareil de réseau :
la détection sur un côté récepteur d'une sous-couche de codage physique du retard d'alignement provoqué par le décalage d'une donnée vers la position d'alignement correcte dans la sous-couche de codage physique;
l'émission du retard d'alignement détecté vers le côté émetteur de la sous-couche de codage physique via une interconnexion;
la réalisation d'une compensation de retard sur le côté émetteur de la sous-couche de codage physique sur la base dudit retard d'alignement.
